# FASCICULE DE BREVET EUROPEEN

(11) **EP 3 775 578 B1**
(45) Date de publication et mention de la délivrance du brevet: **15.06.2022**
(21) Numéro de dépôt: 19718437.7
(22) Date de dépôt: 21.03.2019
(51) Int. Cl.: F15B 13/044, F15B 13/04

(54) **SERVOVALVE DE RÉGULATION DE DÉBIT OU DE PRESSION D'UN FLUIDE**
SERVOVENTIL ZUR REGELUNG DES DRUCKS ODER DURCHFLUSSES EINES FLUIDS
SERVOVALVE FOR REGULATING PRESSURE OR FLOW OF A FLUID

(30) Priorité: 30.03.2018 FR 1852793
(43) Date de publication de la demande: 17.02.2021
(73) Titulaire: Fluid Actuation & Control Toulouse, 31830 Plaisance-du-Touch (FR)
(72) Inventeur: OZZELLO, Guylain, 31830 Plaisance du Touch (FR)
(74) Mandataire: Bringer IP
(86) Numéro de dépôt international: PCT/FR2019/050644
(87) Numéro de publication internationale: WO 2019/186031

(56) Documents cités:
- FR-A1- 2 362 289
- US-A- 4 442 855

## Description

### 1. Domaine technique de l'invention

Le domaine de l'invention est celui de la régulation de débit ou de pression d'un fluide, liquide ou gazeux. L'invention concerne plus particulièrement une servovalve de régulation de débit ou de pression d'un fluide ou permettant l'asservissement d'un vérin.

### 2. Arrière-plan technologique

Une servovalve est un équipement utilisé au sein d'une boucle d'asservissement afin de convertir un courant électrique en une portion de surface découverte, cette surface régulant plus ou moins de passage de débit suivant le courant de commande. Les servovalves permettent de réaliser de l'asservissement en position de vérins, de réguler un débit d'injection ou d'asservir la pression d'un système. Il existe une multitude d'architecture de servovalves, chacune ayant des spécificités et chacune étant en adéquation avec son besoin. La plus répandue est la servovalve double étage qui comprend un moteur couple et un étage d'amplification de puissance hydraulique (type « jet pipe », buse palette ou « devis ») qui permet de positionner l'étage de puissance dans la position requise par le système via une tige de rétroaction.

En lieu et place du moteur couple et de l'étage d'amplification de puissance il est possible, si les efforts nécessaires au déplacement le permettent, d'utiliser une valve à entrainement (ou attaque) direct connue sous la dénomination anglaise de *« direct drive valve* » comme par exemple un moteur couple proportionnel à débattement limité qui positionne un étage de puissance qui peut être de type boisseau sphérique, boisseau cylindrique ou une fourchette « devis » afin de laisser passer plus ou moins de débit dans le circuit conformément à la commande de son calculateur.

L'étage de puissance a pour fonction de délivrer les débits requis aux différents ports hydrauliques.

De son côté, l'étage de commande peut comprendre un aimant permanent, une bobine et une armature configurée pour pouvoir être entrainée en rotation autour d'une direction, dite direction axiale. En cas d'alimentation de la bobine par un courant électrique, ledit déplacement angulaire de ladite armature est proportionnel audit courant d'alimentation.

L'étage de puissance peut par exemple comprendre une fourrure et un tambour monté mobile en rotation dans ladite fourrure et comprenant chacun des canaux de circulation de fluide agencés de manière à pouvoir être mis en communication de fluide selon la position du tambour par rapport à la fourrure pour délivrer un débit variable fonction de la position angulaire dudit tambour par rapport à la fourrure, de la différence de pression entre les cavités, et de la géométrie des sections découvertes.

L'un des paramètres limitant le champ des choix possibles quant à l'architecture des servovalves à attaque directe est la tenue des exigences d'hystérésis et de résolution nécessaires à un asservissement efficace. Les liaisons doivent permettre de minimiser les frottements entre la fourrure et le tambour, induits par les défauts géométriques des pièces. Les liaisons doivent également permettre d'être utilisées avec un jeu mécanique extrêmement faible entre la fourrure et le tambour afin de minimiser les fuites et maximiser le gain en pression. Enfin, les liaisons ne doivent autoriser aucun jeu dans la transmission de mouvement entre l'armature jusqu'au tambour afin de ne pas rattraper celui-ci lors des changements de directions.

Une servovalve selon le préambule de la revendication 1 est connu du document FR 2 362 289.

### 3. Objectifs de l'invention

L'invention vise à fournir une servovalve qui pallie au moins certains des inconvénients des servovalves à attaque directe connues.

L'invention vise en particulier à fournir une telle servovalve qui présente un nombre minimisé de pièces.

L'invention vise également à fournir, dans au moins un mode de réalisation, une servovalve qui présente des frottements limités.

L'invention vise en particulier à fournir, dans au moins un mode de réalisation, une servovalve qui présente une hystérésis limitée.

L'invention vise également à fournir, dans au moins un mode de réalisation, une servovalve peu sensible aux tolérances de fabrication des pièces constitutives de la servovalve.

L'invention vise aussi à fournir, dans au moins un mode de réalisation, une servovalve dont la commande permet de transmettre un mouvement de rotation à angle limité, inférieure à plus ou moins 7°.

L'invention vise aussi à fournir, dans au moins un mode de réalisation, une servovalve qui ne nécessite pas la présence d'un joint dynamique.

L'invention vise aussi à fournir, dans au moins un mode de réalisation de l'invention, une servovalve qui peut être utilisée avec tous types de fluides, liquides ou gazeux.

L'invention vise aussi à fournir, dans au moins un mode de réalisation, une servovalve qui permet le dosage de fluides à faible pression.

L'invention vise aussi à fournir, dans au moins un mode de réalisation de l'invention, une servovalve qui permet de réduire sensiblement la fuite entre les circuits pouvant être reliés par une telle servovalve par rapport aux servovalves mono étage jet pipe, devis ou buse palette.

L'invention vise enfin à fournir, dans au moins un mode de réalisation de l'invention, une servovalve formant un organe de régulation à attaque directe (type direct drive valve) permettant d'ouvrir ou fermer de grandes sections qui ne peuvent être visées par des servovalves de type mono étage jet pipe, devis ou buse palette.

### 4. Exposé de l'invention

Pour ce faire, l'invention concerne une servovalve de régulation de débit ou de pression d'un fluide comprenant :
- un étage de commande comprenant au moins un aimant permanent, au moins une bobine et une armature configurée pour pouvoir être entrainée en rotation autour d'une direction, dite direction axiale, en cas d'alimentation d'au moins une bobine par un courant électrique, ledit déplacement angulaire de ladite armature étant proportionnel audit courant d'alimentation,
- un étage de puissance comprenant une fourrure et un tambour monté mobile en rotation dans ladite fourrure et comprenant chacun des canaux de circulation de fluide agencés de manière à pouvoir être mis en communication de fluide selon la position du tambour par rapport à la fourrure pour délivrer à des ports de connexion un fluide à débit ou pression dépendant notamment de la rotation dudit tambour par rapport à la fourrure,
- un arbre élancé de transmission mécanique s'étendant le long de ladite direction axiale et présentant une première extrémité reliée à ladite armature et une extrémité opposée reliée audit tambour de manière à pouvoir transmettre mécaniquement un couple de commande délivré par ladite armature audit tambour.

Une servovalve selon l'invention est caractérisée en ce que ledit étage de commande comprend en outre un tube torsible élancé s'étendant le long de la direction axiale autour dudit arbre élancé de transmission et présentant une première extrémité solidaire de ladite armature, frettée sur ladite première extrémité dudit arbre de transmission, et une extrémité opposée enserrée par un support de tube s'étendant jusque ladite fourrure, de manière à former un équipage mobile flexible qui limite les efforts de frottement entre ledit tambour et ladite fourrure de la servovalve.

Une servovalve selon l'invention présente donc la particularité de comprendre un tube torsible élancé qui relie solidairement l'armature mobile de l'étage de commande et le tambour par l'intermédiaire de l'arbre élancé de transmission. Ce tube torsible s'étend le long de la direction axiale et est déformable en torsion autour de cette direction axiale.

Ainsi et selon l'invention, lorsque l'armature se déplace angulairement sous l'effet d'un courant d'alimentation, le tambour tourne de la même position angulaire aux efforts de frottements et à l'inertie des pièces près, la raideur en torsion de l'arbre de transmission s'opposant à cet effet.

Cette liaison entre l'armature et le tambour par un tel tube torsible élancé et flexible, et un arbre élancé de transmission permet de limiter les frottements entre le tambour et la fourrure lorsque l'ensemble mobile formé au moins du support de tube, du tube torsible, de l'armature, de l'arbre élancé de transmission et du tambour, est monté sur la fourrure.

En particulier, le tambour et la fourrure ne sont jamais parfaitement alignés du fait des tolérances de fabrication de différentes pièces de la servovalve. De plus, ce système est hyperstatique, et c'est donc les flexibilités des pièces qui rende le système fonctionnel.

Or, la flexibilité de l'équipage mobile de la servovalve selon l'invention, qui est le résultat de la flexibilité des pièces constitutives de la servovalve selon l'invention, autorise la déformation des pièces et permet donc de limiter les efforts radiaux (c'est-à-dire les efforts de frottement) entre le tambour et la fourrure.

En particulier, le tube de torsion est élancé afin de permettre une flexion qui limite les efforts de contact entre le tambour et la fourrure.

L'étage de puissance d'une servovalve selon l'invention comprend une fourrure et un tambour monté mobile en rotation dans la fourrure et comprenant chacun des canaux de circulation de fluide agencés de manière à pouvoir être mis en communication de fluide selon la position du tambour par rapport à la fourrure pour délivrer à des ports de connexion un fluide à débit ou pression dépendant notamment de la rotation dudit tambour par rapport à la fourrure.

Le débit de fluide peut dépendre, non seulement de la position du tambour par rapport à la fourrure, mais également de la section découverte réalisée par le déplacement du tambour par rapport à la fourrure, de la différence de pression aux bornes de cette section, du type d'écoulement (laminaire, turbulent, sub-sonique...) et du fluide considéré.

Avantageusement et selon l'invention, ladite extrémité dudit arbre élancé de transmission mécanique solidaire dudit tambour est en outre relié audit tambour par l'intermédiaire d'une plaque de transmission de couple solidaire dudit tambour, s'étendant perpendiculairement à ladite direction axiale et présentant une rigidité dans ledit axe de transmission de couple et une souplesse dans les autres directions.

En d'autres termes, de préférence, l'équipage mobile comprend également une plaque de transmission de couple solidaire dudit tambour et reliée audit arbre de transmission.

Avantageusement et selon l'invention, ledit tambour et ladite plaque de transmission de couple sont formée d'une seule pièce.

La combinaison du tube torsible élancé, de l'arbre de transmission et de la plaque de transmission permet d'une part de solidariser l'armature de l'étage de commande et le tambour de l'étage de puissance et d'autre part de limiter les efforts de frottements.

Aussi, une servovalve selon l'invention permet de limiter l'hystérésis par la limitation des frottements entre le tambour et la fourrure.

L'invention permet donc de limiter l'hystérésis en mettant en œuvre un nombre limité de pièces mécaniques.

En outre, une servovalve selon l'invention permet de compenser des éventuelles erreurs de tolérance de fabrication des pièces mécaniques en limitant les efforts de frottement par la flexibilité de l'équipage mobile.

Une servovalve selon l'invention est donc moins sensible aux variations de fabrication des pièces que les servovalves de l'art antérieur.

En particulier, la gamme de tolérance mécanique des pièces est atténuée par la souplesse des pièces fonctionnelles (tube de torsion, arbre de transmission, tambour, plaque de transmission de couple) dans les axes non fonctionnels.

Plus le couple produit par le moteur couple est élevé et plus la tolérance de fabrication des pièces peut être importante. Plus le couple produit est important moins les pièces ont besoin d'être flexibles.

L'une des particularités de l'invention est donc de mettre en œuvre des pièces souples dans les directions non fonctionnelles qui permettent de limiter les efforts radiaux, source de frottements et donc source d'hystérésis.

Avantageusement et selon l'invention, ledit arbre de transmission est également flexible dans les directions non fonctionnelles.

Cette variante avantageuse permet de limiter encore davantage les efforts radiaux et donc les frottements par la flexibilité et souplesse de l'arbre de transmission.

Avantageusement et selon l'invention, ledit tube torsible présente une longueur et un diamètre dont le rapport est supérieur ou égal à 8.

De préférence, le support de tube est configuré pour conserver une raideur dans l'axe de torsion du tube torsible pour que l'essentiel de la flexibilité dans cette direction soit le fait du tube torsible. Un tel support de tube est avantageusement en carbure.

L'invention concerne également une servovalve caractérisée en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'une servovalve selon un autre mode de réalisation de l'invention,
- la figure 2 est une vue schématique de la servovalve de la figure 1 sur laquelle des éléments ne sont pas représentés pour laisser apparaitre notamment la plaque de transmission de couple,
- le figure 3 est une vue schématique en coupe longitudinale de la servovalve de la figure 1,
- la figure 4 est une vue schématique en coupe longitudinale d'un détail supérieur de la figure 3 illustrant les liaisons entre l'armature, le tube torsible et l'arbre de transmission de la servovalve,
- la figure 5 est une vue schématique en coupe longitudinale d'un détail inférieur de la figure 3 illustrant les liaions entre l'arbre de transmission, le tambour et le support de tube de la servovalve

### 6. Description détaillée d'un mode de réalisation de l'invention

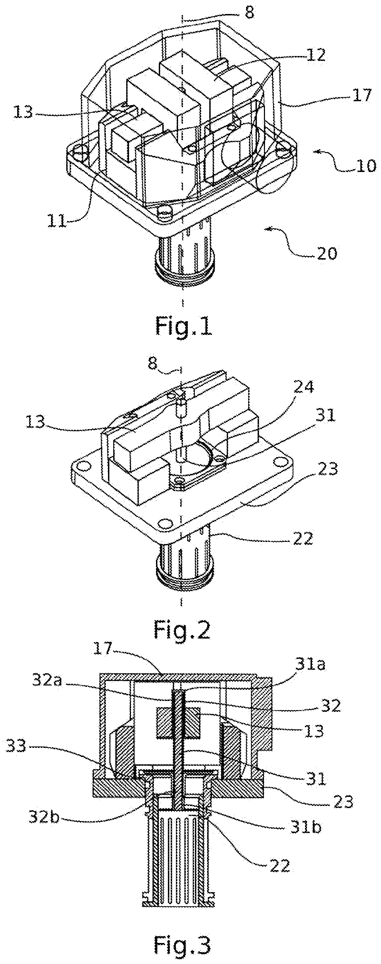

Sur les figures, les échelles et les proportions ne sont pas strictement respectées et ce, à des fins d'illustration et de clarté. Dans toute la description détaillée qui suit en référence aux figures, sauf indication contraire, chaque élément de la servovalve est décrit tel qu'il est agencé lorsque la servovalve est orientée de sorte que ladite direction axiale le long de laquelle s'étend le tube torsible est verticale. Cet agencement est représenté sur la figure 1.

En outre, les éléments identiques, similaires ou analogues sont désignés par les mêmes références dans toutes les figures. La direction longitudinale correspond à la direction axiale qui est la direction principale du tube torsible.

La servovalve représentée sur les figures comprend un étage de commande 10 et un étage de puissance 20.

L'étage de commande 10 est logé dans un carter 17, représenté en transparence sur la figure 1 pour laisser apparaitre les pièces de la servovalve logées dans le carter 17. Cet étage de commande 10 comprend deux aimants permanents 11, deux bobines 12 et une armature 13 configurée pour pouvoir être entrainée en rotation autour d'une direction axiale 8, en cas d'alimentation des bobines 12 par un courant électrique.

Le déplacement angulaire de l'armature 13 est proportionnel au courant d'alimentation des bobines 12. Sur les figures, le circuit d'alimentation des bobines n'est pas représenté à des fins de clarté.

Les aimants permanents 11 peuvent par exemple être des aimants faits d'un alliage de samarium et de cobalt. Bien entendu, d'autres aimants peuvent être utilisés sans remettre en cause le principe de l'invention.

L'étage de puissance 20 comprend une fourrure 23 et un tambour 22 monté mobile en rotation dans la fourrure 23 et comprenant chacun des canaux de circulation de fluide, agencés de manière à pouvoir être mis en communication de fluide selon la position du tambour par rapport à la fourrure pour délivrer à des ports de connexion un fluide à débit ou pression proportionnel à la rotation du tambour 22 par rapport à la fourrure 23.

La servovalve comprend également un arbre élancé de transmission 31 mécanique s'étendant le long de la direction axiale 8. Cet arbre présente une première extrémité 31a reliée à l'armature et une extrémité opposée 31b reliée au tambour 22 de manière à pouvoir transmettre mécaniquement un couple de commande délivré par l'armature 13 au tambour 22. Cet arbre de transmission est par exemple fait en carbure de tungstène afin de limiter le déplacement angulaire différentiel entre l'armature et le tambour. La raideur torsible d'un tel arbre sera au moins 30% plus raide en torsion que celle du tube torsible 32 décrit ci-après.

L'extrémité 31b de l'arbre de transmission 31 est relié au tambour 22 par l'intermédiaire d'une plaque 24 de transmission de couple.

Cette plaque 24 de transmission de couple présent une rigidité dans la direction axiale et une souplesse dans les autres directions.

Selon le mode de réalisation des figures, la plaque 24 de transmission de couple présente une épaisseur de 0,3mm, une rigidité torsible de 200 Nm/rad dans la direction fonctionnelle (transmission du couple) et une souplesse dans les directions perpendiculaires à l'axe du tube de torsion de 1000 N/rad.

La servovalve comprend également un tube torsible 32 élancé qui s'étend le long de la direction axiale 8 autour de l'arbre de transmission 31. Ce tube torsible 32 présente une première extrémité 32a solidaire de l'armature 13 qui est frettée sur la première extrémité 31a de l'arbre de transmission 31. Le tube torsible 32 comprend également une extrémité opposée 32b enserrée par un support de tube 33 qui s'étend jusqu'à la fourrure 23 et qui permet d'ajuster l'équipage mobile sur la fourrure.

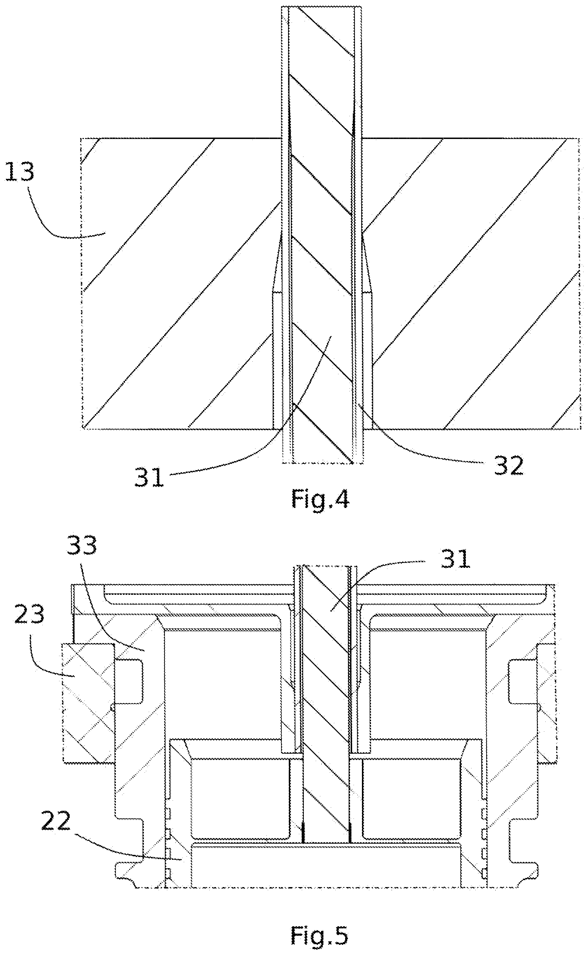

La figure 4 est une vue schématique détaillée du frettage du tube torsible 32 sur l'arbre de transmission 31. La liaison entre l'armature 13 et le tube torsible 32 est également obtenu par frettage du tube sur l'armature 13. Ce frettage est obtenu par un ajustement serré du tube torsible 32 dans un alésage formé dans l'armature 13. Le couple de transmission est obtenu de manière classique par la conjonction des effets dus au frottement et au serrage dans la zone de contact entre les deux pièces. En d'autres termes, cette vue illustre de manière détaillée la portion supérieure de la figure 3.

La figure 5 est une vue schématique détaillée de la liaison entre l'arbre de transmisson 31, le tambour 22 et le support de tube 33 au niveau de l'extrémité inférieure de l'arbre de transmission 31. En d'autres termes, cette vue illustre de manière détaillée la portion inférieure de la figure 3.

Selon un mode de réalisation des figures, le tube torsible 32 présente un rapport entre la longueur et le diamètre extérieure du tube de 8. Le tube est par exemple fait en un matériau du type cuivre au berylium.

La flexibilité du tube torsible est par exemple de 900N/rad dans les axes transverses à l'axe du tube de torsion. Sa raideur dans l'axe de torsion est par exemple de 14Nm/rad.

D'une manière générale, les pièces constitutives de la servovalve sont choisies pour que le rapport entre le couple produit par le moteur couple et le couple de frottement soit supérieur à 50.

Ainsi, une servovalve selon l'invention permet de former un équipage mobile qui limite les efforts de frottement entre le tambour et la fourrure de la servovalve.

Bien entendu, les matériaux et valeurs numériques donnés à titre d'exemple ne sont pas limitatifs et une servovalve selon l'invention peut présenter d'autres modes de réalisation qui permettent de résoudre le problème technique à la base de l'invention qui est de réduire les frottements et de présenter une hystérésis limitée répondant au besoin d'une boucle d'asservissement malgré un nombre de pièces limité.

## Revendications

1. Servovalve de régulation de débit ou de pression d'un fluide comprenant :
- un étage de commande (10) comprenant au moins un aimant permanent (11), au moins une bobine (12) et une armature (13) configurée pour pouvoir être entrainée en rotation autour d'une direction, dite direction axiale (8), en cas d'alimentation d'au moins une bobine (12) par un courant électrique, ledit déplacement angulaire de ladite armature (13) étant proportionnel audit courant d'alimentation,
- un étage de puissance (20) comprenant une fourrure (23) et un tambour (22) monté mobile en rotation dans ladite fourrure (23) et comprenant chacun des canaux de circulation de fluide agencés de manière à pouvoir être mis en communication de fluide selon la position du tambour (22) par rapport à la fourrure (23) pour délivrer à des ports de connexion un fluide à débit ou pression dépendant notamment de la rotation dudit tambour par rapport à la fourrure,
- un arbre élancé de transmission (31) mécanique s'étendant le long de ladite direction axiale (8) et présentant une première extrémité (31a) reliée à ladite armature (13) et une extrémité opposée (31b) reliée audit tambour (22) de manière à pouvoir transmettre mécaniquement un couple de commande délivré par ladite armature audit tambour selon un axe de transmission de couple,
**caractérisée en ce que** ledit étage de commande comprend en outre un tube torsible (32) élancé s'étendant le long de la direction axiale (8) autour dudit arbre de transmission (31) et présentant une première extrémité (32a) solidaire de ladite armature (13), frettée sur ladite première extrémité (31a) dudit arbre de transmission (31), et une extrémité opposée (32b) enserrée par un support de tube (33) s'étendant jusque ladite fourrure (23), de manière à former un équipage mobile flexible qui limite les efforts de frottement entre ledit tambour (22) et ladite fourrure (23) de la servovalve.

2. Servovalve selon la revendication 1, **caractérisée en ce que** ladite extrémité (31b) dudit arbre élancé de transmission (31) mécanique solidaire dudit tambour (22) est relié audit tambour par l'intermédiaire d'une plaque de transmission (24) de couple solidaire dudit tambour, s'étendant perpendiculairement à ladite direction axiale et présentant une rigidité dans ledit axe de transmission de couple et une souplesse dans les autres directions.

3. Servovalve de régulation selon la revendication 2, **caractérisée en ce que** ledit tambour (22) et ladite plaque de transmission (24) sont formée d'une seule pièce.

4. Servovalve de régulation selon l'une des revendications 2 ou 3, **caractérisée en ce que** ladite plaque de transmission (24) de couple est rigide dans la direction axiale et flexible dans toutes les autres directions.

5. Servovalve de régulation selon l'une des revendications 1 à 4, **caractérisée en ce que** ledit support de tube (33) est en carbure.

6. Servovalve de régulation selon l'une des revendications 1 à 5, **caractérisée en ce que** ledit tube torsible (32) présente une longueur et un diamètre dont le rapport est supérieur ou égal à 8.

## Patentansprüche

1. Servoventil zur Regelung des Durchflusses oder des Drucks eines Fluids, worin das Servoventil umfasst:
eine Steuerstufe (10), die mindestens einen permanenten Magneten (11), mindestens eine Spule (12) und einen Läufer (13) umfasst, der ausgestaltet ist, um eine Richtung, die sogenannte axiale Richtung (8), in Drehung versetzt zu werden, wenn mindestens eine Spule (12) mit einem elektrischen Strom versorgt wird, wobei die Winkelverschiebung des Läufers (13) proportional zu dem Versorgungsstrom ist,
eine Leistungsstufe (20), die eine Füllplatte (23) und eine Trommel (22) umfasst, die in der Füllplatte (23) drehbar befestigt ist und jeweils Fluidzirkulationskanäle umfasst, die derart angeordnet sind, dass entsprechend der Position der Trommel (22) in Bezug auf die Füllplatte (23) in Fluidverbindung gebracht werden können, um ein Fluid mit einer Durchflussmenge oder einem Druck an Anschlussöffnungen zu liefern, die insbesondere von der Drehung der Trommel in Bezug auf die Füllplatte abhängen,
eine schlanke mechanische Übertragungswelle (31), die sich entlang der axialen Richtung (8) erstreckt und ein erstes Ende (31a), das mit dem Läufer (13) verbunden ist, und ein abgewandtes Ende (31b) aufweist, das mit der Trommel (22) verbunden ist, um ein von dem Läufer geliefertes Steuerdrehmoment mechanisch entlang einer Drehmomentübertragungsachse auf die Trommel übertragen zu können,
**dadurch gekennzeichnet, dass** die Steuerstufe zudem ein schlankes, torsionsflexibles Rohr (32) umfasst, das sich entlang der axialen Richtung (8) um die schlanke Übertragungswelle (31) erstreckt und ein erstes Ende (32a) aufweist, das an dem Läufer (13) befestigt ist, das auf das erste Ende (31a) der Übertragungswelle (31) aufgeschrumpft ist, und ein abgewandtes Ende (32b), das von einem Rohrträger (33) festgeklemmt wird, der sich bis zur Füllplatte (23) erstreckt, so dass eine flexible, bewegliche Baugruppe ausgebildet wird, die die Reibungskräfte zwischen der Trommel (22) und der Füllplatte (23) des Servoventils begrenzt.

2. Servoventil nach Anspruch 1, **dadurch gekennzeichnet, dass** das Ende (31b) der schlanken mechanischen Übertragungswelle (31), das an der Trommel (22) befestigt ist, mit der Trommel mittels einer Drehmomentübertragungsplatte (24) verbunden ist, die an der Trommel befestigt ist, sich senkrecht zur axialen Richtung erstreckt und in der Drehmomentübertragungsachse steif und in den anderen Richtungen flexibel ist.

3. Regelservoventil nach Anspruch 2, **dadurch gekennzeichnet, dass** die Trommel (22) und die Drehmomentübertragungsplatte (24) aus einem Stück gefertigt sind.

4. Regelservoventil nach einem der Ansprüche 2 oder 3, **dadurch gekennzeichnet, dass** die Drehmomentübertragungsplatte (24) in der axialen Richtung starr und in allen anderen Richtungen flexibel ist.

5. Regelservoventil nach einem der Ansprüche 1 bis 4, **dadurch gekennzeichnet, dass** der Rohrträger (33) aus einem Carbid besteht.

6. Regelservoventil nach einem der Ansprüche 1 bis 5, **dadurch gekennzeichnet, dass** das torsionsflexible Rohr (32) eine Länge und einen Durchmesser aufweist, deren Verhältnis größer oder gleich 8 ist.

## Claims

1. A servovalve for regulating the flow or pressure of a fluid, comprising:
- a control stage (10) comprising at least one permanent magnet (11), at least one coil (12) and an armature (13) configured to be able to be driven in rotation about a direction, called the axial direction (8), if at least one coil (12) is supplied with an electric current, said angular displacement of said armature (13) being proportional to said supply current,
- a power stage (20) comprising a filler plate (23) and a drum (22) mounted rotatably in said filler plate (23) and each comprising fluid circulation channels arranged so as to be able to be placed in fluid communication according to the position of the drum (22) with respect to the filler plate (23) to deliver a fluid to connection ports at a flow rate or pressure depending in particular on the rotation of said drum relative to the filler plate,
- a slender mechanical transmission shaft (31) extending along said axial direction (8) and having a first end (31a) connected to said armature (13) and an opposite end (31b) connected to said drum (22) so as to be able to mechanically transmit a control torque delivered by said armature to said drum along a torque transmission axis,
**characterized in that** said control stage further comprises a slender torsionally flexible tube (32) extending along the axial direction (8) around said slender transmission shaft (31) and having a first end (32a) secured with said armature (13), shrunk onto said first end (31a) of said transmission shaft (31), and an opposite end (32b) clamped by a tube support (33) extending as far as said filler plate (23), so as to form a flexible mobile assembly that limits the frictional forces between said drum (22) and said filler plate (23) of the servovalve.

2. The servovalve according to claim 1, **characterized in that** said end (31b) of said slender mechanical transmission shaft (31) secured to said drum (22) is connected to said drum by means of a torque transmission plate (24) secured to said drum, extending perpendicularly to said axial direction and having rigidity in said torque transmission axis and flexibility in the other directions.

3. The regulating servovalve according to claim 2, **characterized in that** said drum (22) and said torque transmission plate (24) are formed in one piece.

4. The regulating servovalve according to either of claims 2 or 3, **characterized in that** said torque transmission plate (24) is rigid in the axial direction and flexible in all other directions.

5. The regulating servovalve according to any of claims 1 to 4, **characterized in that** said tube support (33) is made of carbide.

6. The regulating servovalve according to any of claims 1 to 5, **characterized in that** said torsionally flexible tube (32) has a length and a diameter whose ratio is greater than or equal to 8.
